# FASCICULE DE BREVET EUROPEEN

(11) **EP 2 723 529 B1**
(45) Date de publication et mention de la délivrance du brevet: **12.08.2015**
(21) Numéro de dépôt: 12731547.1
(22) Date de dépôt: 07.06.2012
(51) Int. Cl.: B23Q 3/06, B25B 5/14

(54) **DISPOSITIF DE MAINTIEN D'UNE AUBE DE TURBOMACHINE EN VUE D'UN USINAGE**
VORRICHTUNG ZUM HALTEN EINER TURBOMASCHINENSCHAUFEL ZUR BEARBEITUNG
DEVICE FOR HOLDING A TURBOMACHINE BLADE FOR THE PURPOSES OF MACHINING

(30) Priorité: 21.06.2011 FR 1155464
(43) Date de publication de la demande: 30.04.2014
(73) Titulaire: SNECMA, 75015 Paris (FR)
(72) Inventeur: MARQUOIN, Thomas, F-77550 Moissy Cramayel Cedex (FR); DUPOUY, Olivier, F-77550 Moissy Cramayel Cedex (FR)
(74) Mandataire: Pichat, Thierry
(86) Numéro de dépôt international: PCT/FR2012/051286
(87) Numéro de publication internationale: WO 2012/175840

(56) Documents cités:
- EP-A1- 1 321 236
- FR-A1- 2 879 117
- US-A- 4 829 720

## Description

La présente invention concerne un dispositif de maintien d'une aube de turbomachine en vue d'un usinage.

Une aube de turbomachine comporte une pale, destinée à être disposée dans une veine de circulation de gaz, et un pied, destiné être engagé dans un alvéole d'un disque. La pale et le pied sont séparés par une plate-forme délimitant une partie de la paroi interne de la veine de circulation de gaz.

Lors de la fabrication d'une aube, on réalise classiquement une pièce brute, par forgeage ou par fonderie, dont les dimensions correspondent aux dimensions finies en ce qui concerne la partie formant la pale. En revanche, la partie destinée à former le pied n'est qu'une ébauche qu'il convient d'usiner pour lui donner sa forme et ses dimensions définitives.

Une fois usiné, le pied d'aube comporte encore des arêtes saillantes dont les angles doivent être cassés ou émoussés lors d'une opération dite d'ajustage ou de rayonnage.

L'ajustage d'un pied d'aube est en général effectué manuellement par un opérateur qui usine les arêtes saillantes à l'aide d'une fraise à carbure ou d'une brosse par exemple. Cette opération d'ajustage étant manuelle, des écarts dimensionnels peuvent apparaître d'une aube à une autre ou d'un opérateur à un autre.

Si l'ajustage du pied d'aube est réalisé de manière insuffisante ou imprécise (l'arête saillante n'étant par exemple pas suffisamment émoussée), les opérations aval de fabrication peuvent être affectées. C'est ainsi notamment que, lors du grenaillage d'un pied d'aube mal ajusté, certaines billes de grenaillage peuvent être refoulées par une arête trop saillante. Une arête saillante génère en outre des concentrations de contraintes provoquant des fissures prématurées du pied d'aube.

Les écarts dimensionnels entre les pieds d'aubes peuvent également compliquer le montage des pieds dans les alvéoles des disques.

Enfin, les opérations manuelles d'ajustage sont complexes et coûteuses.

US-4,829,720 décrit un dispositif de maintien d'une aube de turbomachine avec un support comprenant un logement dans lequel est monté de manière amovible un bloc présentant une ouverture de montage d'une pale d'une aube, ledit bloc comprenant des points d'appui sur la pale.

La demande de brevet FR 10/57384, au nom de la Demanderesse et non encore publiée, divulgue un procédé d'ajustage de pieds d'aubes à l'aide d'une machine à commande numérique. Lors de leur ajustage, les aubes sont maintenues dans un outillage comportant un support dans lequel sont ménagés des logements. La pale de l'aube est enserrée entre deux mâchoires qui sont articulées à une extrémité et fixées l'une à l'autre à l'aide d'une première vis à l'autre extrémité. Les mâchoires comportent des plots d'appui contre lesquels l'aube est destinée à venir s'appuyer. Une fois que l'aube est placée entre les mâchoires, une deuxième vis prévue sur l'une des mâchoires, permet de plaquer l'aube contre les points d'appui précités. Les mâchoires et l'aube sont alors montées dans un logement du support et maintenues dans ce dernier à l'aide de loquets.

Plusieurs aubes peuvent ainsi être montées simultanément sur le support de l'outillage dans les différents logements, en vue de subir un ajustage.

Le montage ou le démontage des aubes est toutefois fastidieux. En effet, après ajustage par exemple, lorsque l'on souhaite retirer une aube, il faut déplacer les loquets, retirer les mâchoires et l'aube du logement du support, et dévisser la deuxième vis afin de pouvoir retirer la pale hors des mâchoires.

En outre, un tel montage ne permet pas de connaître précisément la position de l'aube par rapport au support. En effet, les mâchoires sont montées dans le logement du support avec un léger jeu de montage de sorte que, même si l'aube est correctement positionnée sur ses points d'appui, il n'est pas possible de connaître avec exactitude la position des mâchoires (et donc de l'aube) par rapport au support qui forme une référence connue.

L'invention a notamment pour but d'apporter une solution simple, efficace et économique à ce problème.

A cet effet, elle propose un dispositif de maintien d'une aube de turbomachine en vue d'un usinage, comportant un support comprenant au moins un logement dans lequel est monté de manière amovible au moins un bloc présentant une ouverture de montage d'une pale d'une aube, ledit bloc comprenant au moins six points d'appui de la pale, caractérisé en ce qu'il comporte un doigt d'appui mobile, destiné à venir en appui sur une surface d'intrados ou d'extrados de l'aube, déplacé par des moyens d'actionnement de façon à ce que, en position de serrage de l'aube, le doigt d'appui plaque la pale contre les points d'appui du bloc, qui lui-même est plaqué contre le support.

Le montage et le démontage d'une aube sont facilités. En effet, pour le montage, il suffit d'introduire l'aube dans l'ouverture du bloc (qui peut déjà être monté dans le logement du support), puis d'actionner le doigt d'appui de façon à ce que l'aube et le bloc soient plaqués respectivement contre les points d'appui et contre le support de manière à assurer leur fixation sur le support. Pour le démontage, il suffit d'actionner le doigt d'appui en sens inverse pour que l'aube puisse être retirée du bloc.

Il n'est donc pas nécessaire de retirer le bloc hors du logement du support, ni de visser ou de dévisser une ou plusieurs vis, comme cela est le cas dans l'art antérieur.

En outre, la position du bloc par rapport au support est connue avec exactitude puisque le bloc est plaqué contre une surface de référence du support. Les positions de la pale et du pied d'aube peuvent donc être déterminées avec une grande précision, ce qui améliore la qualité de l'ajustage réalisé. Par conséquent, les pales des aubes ainsi ajustées peuvent être positionnées correctement à l'intérieur de la veine de circulation de gaz.

Selon une caractéristique de l'invention, les points d'appui sont formés par des plots, par exemple amovibles, dont les extrémités destinées à être en contact avec l'aube sont dépourvues d'arête vive et sont par exemple hémisphériques.

Cette caractéristique permet d'éviter que la pale soit soumise localement à de trop fortes contraintes pouvant provoquer la recristallisation du matériau, ce qui dégraderait ses caractéristiques mécaniques.

Lorsque l'on souhaite ajuster un autre type d'aube, il est possible de changer simplement les plots d'appui et conserver le même bloc, afin d'adapter la position des points d'appui à la forme de la pale. Bien entendu, il est également possible de changer le bloc, si cela s'avère nécessaire.

Avantageusement, le bloc comporte une paroi interne délimitant l'ouverture de montage de la pale, à partir de laquelle font saillie un premier, un second et un troisième plots écartés l'un de l'autre et destinés à venir en appui au niveau d'un bord d'attaque de l'aube ou à proximité de celui-ci, un quatrième plot destiné à venir en appui au niveau d'un bord de fuite de l'aube ou à proximité de celui-ci, un cinquième plot destiné à venir en appui en regard du doigt d'appui mobile et un sixième plot destiné à venir en appui sur une plate-forme de l'aube.

On remarque qu'aucun des plots ne vient en appui contre le pied d'aube, ce qui facilite son ajustage. La position de chacun des plots précités permet en outre de maintenir efficacement et précisément l'aube en position.

De préférence, le bloc comporte deux plots destinés à venir en appui sur la plate-forme de l'aube, avant serrage de l'aube par le doigt d'appui mobile, la plate-forme étant écartée desdits plots après serrage de l'aube.

Les deux plots précités servent au pré-positionnement de l'aube avant serrage et permettent d'éviter que la pale ne pivote dans une mauvaise position lors du serrage par le doigt d'appui mobile.

Selon une forme de réalisation, le bloc comporte un trou de passage du doigt d'appui mobile.

Le bloc est par exemple formé de deux mâchoires articulées l'une par rapport à l'autre à une extrémité et fixées l'une à l'autre à une autre extrémité.

En outre, les moyens d'actionnement du doigt d'appui mobile peuvent comporter une came équipée d'une poignée d'actionnement, la rotation de la came à l'aide de la poignée entraînant le déplacement du doigt d'appui mobile.

Dans ce cas, le dispositif peut comporter une butée apte à limiter la course angulaire de la poignée d'actionnement.

De manière avantageuse, le support comporte plusieurs logements destinés chacun au montage d'un bloc et d'une aube.

Plusieurs pieds d'aube peuvent alors être ajustés lors d'une même opération.

Selon une autre caractéristique de l'invention, le support comporte des moyens de retenue du bloc à l'intérieur du logement correspondant, tels que des loquets.

Le bloc peut ainsi être maintenu dans le logement du support, même lorsque le doigt d'appui est en position de desserrage.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'un dispositif de maintien d'une aube selon l'invention,
- la figure 2 est une vue en perspective agrandie d'une partie du support,
- la figure 3 est une vue agrandie et en perspective d'un logement du support dans lequel sont montés deux mâchoires,
- la figure 4 est une vue en perspective de l'une des mâchoires,
- la figure 5 est une vue en perspective de l'autre mâchoire et du doigt d'appui,
- la figure 6 est une vue en perspective de la mâchoire et du doigt d'appui de la figure 5, et de la came d'actionnement dudit doigt d'appui,
- les figures 7 et 8 sont des vues schématiques, de dessus, montrant une partie du dispositif et d'une aube, respectivement avant et après serrage de l'aube,
- les figures 9 et 10 sont des vues en perspective montrant une partie du dispositif, respectivement avant et après serrage,
- les figures 11 et 12 montrent les positions des plots d'appui vis-à-vis de l'aube,
- la figure 13 est une vue agrandie montrant en outre la position des deux plots d'appui provisoire de la plate-forme de l'aube, avant serrage de l'aube par le doigt d'appui mobile.

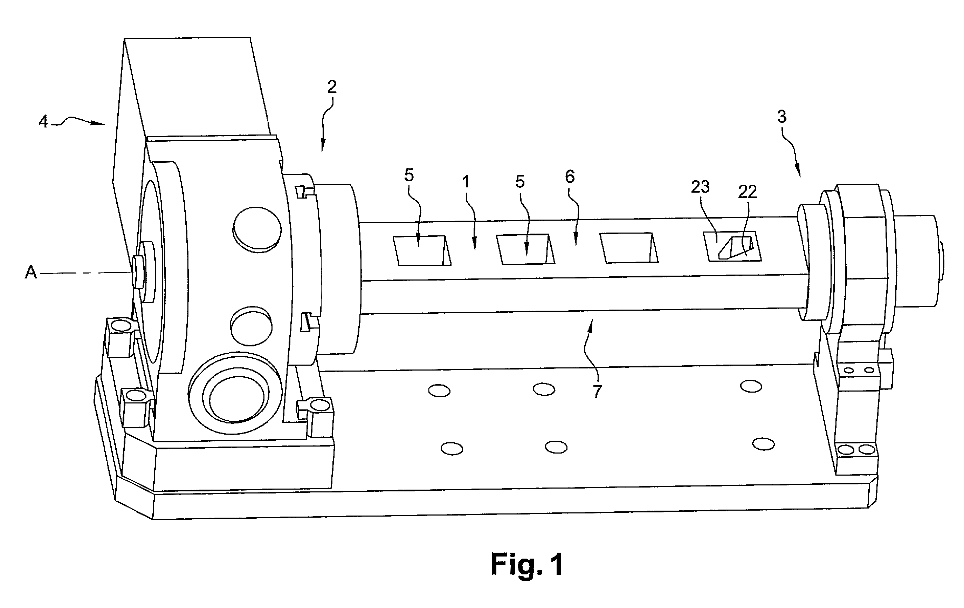

Un dispositif de maintien d'une aube de turbomachine en vue d'un usinage, en particulier en vue d'un ajustage, est représenté à la figure 1. Ce dispositif comporte un support 1 de forme générale parallélépipédique, mobile en rotation autour de son axe longitudinal A. Le support 1 est monté dans des paliers à ses extrémités 2, 3, l'une des extrémités 2 étant entraînée en rotation par l'intermédiaire d'un moteur électrique 4 et de moyens de commande.

Dans la forme de réalisation de la figure 1, le support 1 comporte quatre logements 5 de forme générale carrée, débouchant de part et d'autre du support 1 au niveau de surfaces dites ci-après supérieure 6 et inférieure 7, en référence à leur position en figure 1.

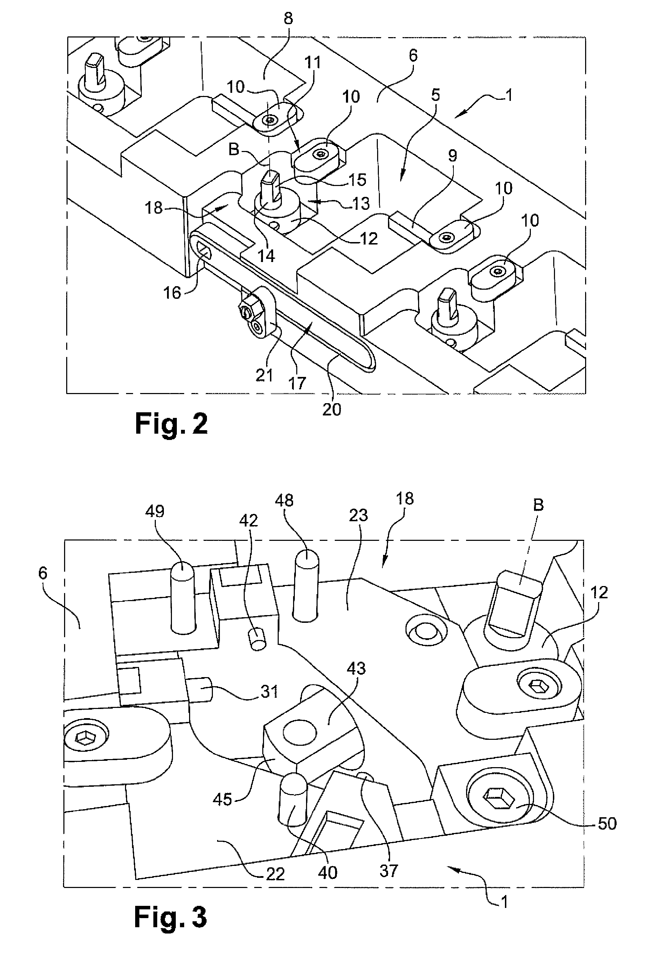

Comme cela est mieux visible à la figure 2, les parois intérieures 8 des logements 5 comportent des saillies longitudinales 9 destinées à former des butées, disposées aux extrémités inférieures des logements 5 et situées en regard l'une de l'autre.

Le support 1 est équipé en outre de loquets 10, disposés aux extrémités supérieures des logements, les loquets 10 étant mobiles entre une position de déverrouillage (figure 2) dans laquelle ils sont logés entièrement dans des évidements 11 du support 1, et une position de verrouillage (figure 3) dans laquelle ils s'étendent en travers du logement 5 correspondant.

Le support comporte de plus une came 12, logée dans un évidement 13 du support 1. La came 12 est de forme cylindrique et est montée pivotante sur le support 1, autour d'un axe B décalé du centre géométrique de la came 12. De cette manière, la came 12 peut pivoter entre une position rétractée (figure 2) dans laquelle elle est logée entièrement dans l'évidement 13 précité et une position déployée dans laquelle elle s'étend en travers du logement 5.

La came 12 comporte un plot cylindrique 14 s'étendant vers le haut suivant l'axe B, et dont l'extrémité libre comporte un méplat 15 destiné à être inséré dans un trou 16 de forme complémentaire d'une poignée 17 d'actionnement de la came 12.

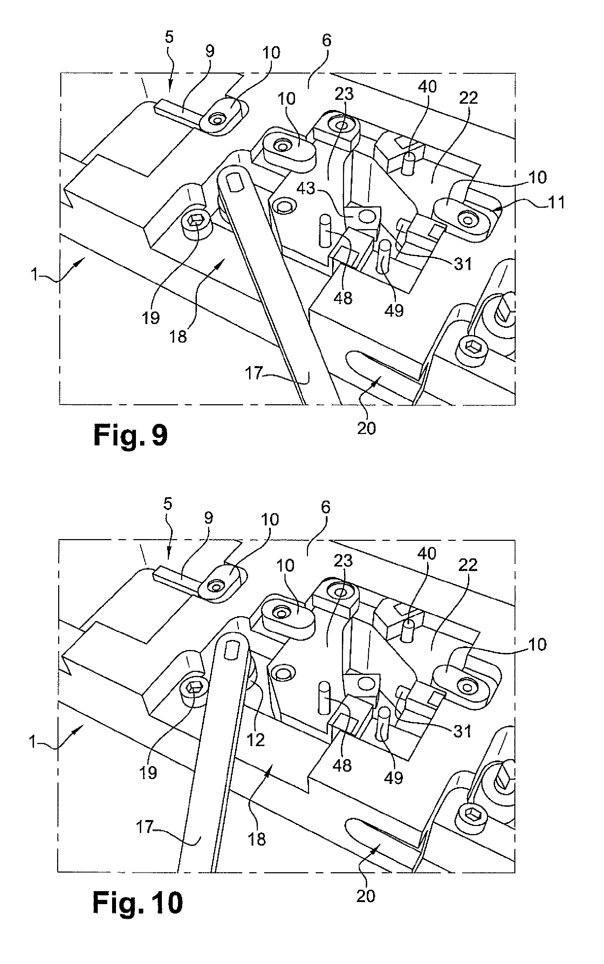

L'extrémité supérieure de l'axe 14 ne dépasse pas le plan supérieur du support 1. Un évidement latéral 18 est en outre réalisé dans la surface supérieure 6 du support 1 de manière à autoriser le montage de la poignée 17 sur le plot 14 de la came 12 ainsi que le débattement angulaire de cette poignée 17 afin d'actionner la came 12. Une butée 19 (figures 9 et 10) peut également être prévue sur le support 1 de façon à limiter la course de la poignée 17. Cette butée est par exemple formée par la tête 19 d'une vis.

Lorsqu'elle n'est pas utilisée, cette poignée 17 peut être logée dans un évidement latéral 20 du support, et maintenue dans le logement à l'aide d'un loquet 21 similaire aux loquets 10.

Le dispositif selon l'invention comporte en outre au moins deux mâchoires 22, 23, visibles aux figures 3 à 8.

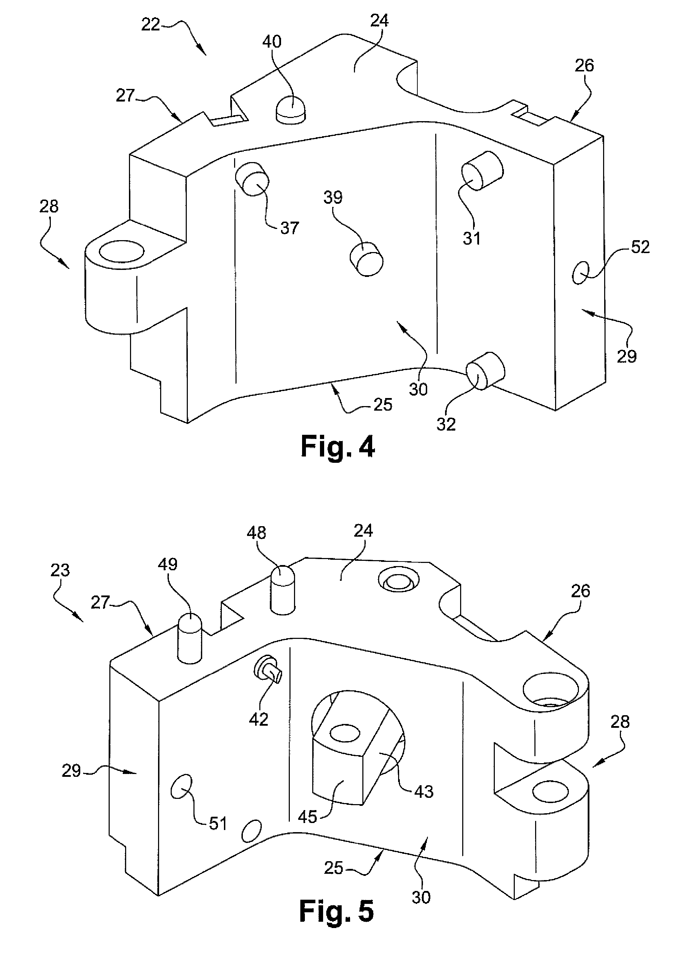

Une première mâchoire 22 est représentée à la figure 4. Celle-ci présente, en vue de dessus, la forme générale d'un L et comprend une surface supérieure 24, une surface inférieure 25, deux surfaces latérales 26, 27 formant sensiblement un angle droit, et des premières et seconde extrémités latérales 28, 29.

Les extrémités latérales 28, 29 sont reliées par une paroi interne 30 à partir de laquelle s'étendent des plots destinés à venir contre une surface d'extrados 33 d'une pale 34 d'une aube 35.

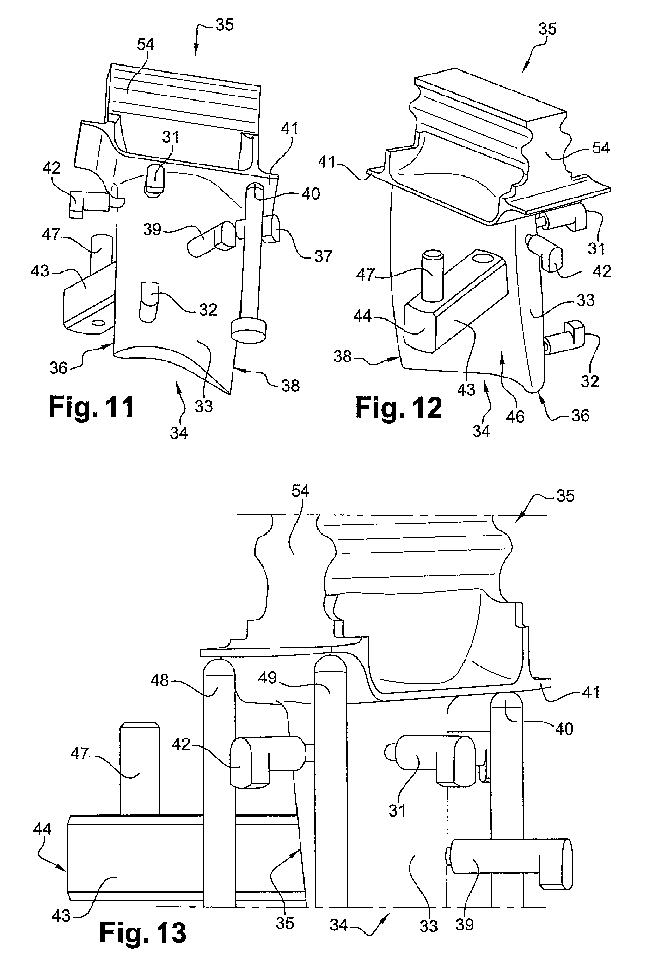

Plus particulièrement, font saillie de la paroi interne 30, un premier et un second plots 31, 32 écartés l'un de l'autre et destinés à venir en appui sur la surface d'extrados 33 de la pale 34, à proximité d'un bord d'attaque 36 de l'aube 35, un troisième plot 37 destiné à venir en appui sur ladite surface d'extrados 33, à proximité d'un bord de fuite 38 de l'aube 35, un quatrième plot 39 destiné à venir en appui sur une zone médiane de la surface d'extrados 33, en regard d'un doigt d'appui mobile qui sera décrit ci-dessous. Le plot 39 n'est pas représenté aux figures 9 et 10. Un cinquième plot 40 fait saillie de la surface supérieure 24 de la première mâchoire 22 et est destiné à venir en appui contre une plateforme 41 de l'aube 35 (figure 11).

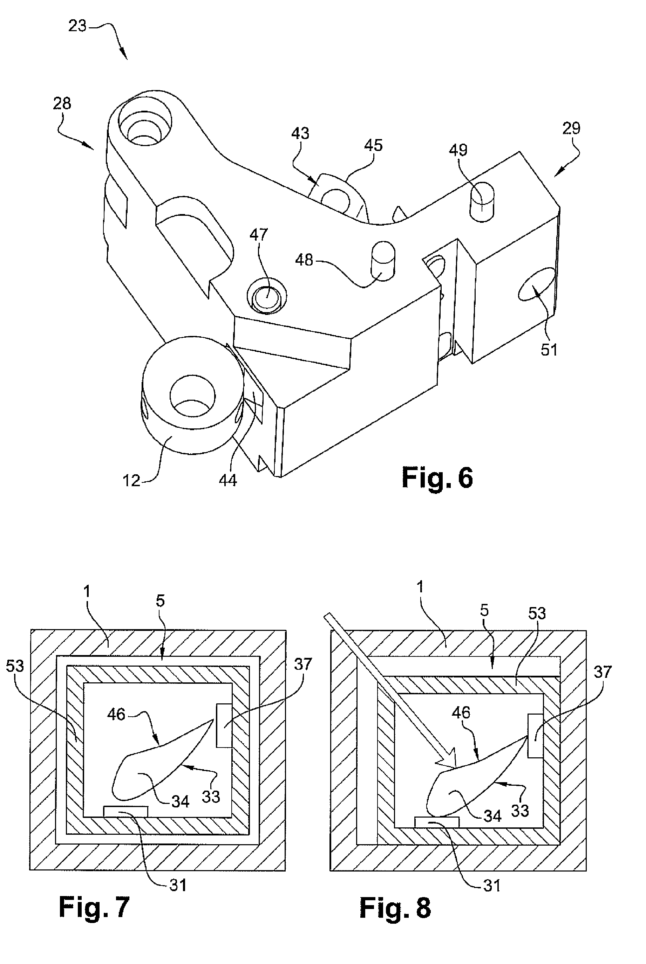

Comme cela est notamment visible aux figures 5 et 6, la seconde mâchoire 23 présente également, en vue de dessus, la forme générale d'un L et comprend une surface supérieure 24, une surface inférieure 25, deux surfaces latérales 26, 27 formant sensiblement un angle droit, et des premières et seconde extrémités latérales 28, 29.

Les extrémités latérales 28, 29 de la seconde mâchoire 23 sont reliées par une paroi interne 30 à partir de laquelle s'étend un plot 42 destiné à venir en appui sur la surface d'extrados 33 de l'aube 35, au niveau du bord d'attaque 36 de l'aube 35.

Les plots 31, 32, 37, 39, 40, 42 forment six points d'appui de référence, permettant le bon positionnement de l'aube 35 dans les mâchoires 22, 23.

La seconde mâchoire 23 est également traversée par un trou débouchant dans la paroi 30 et servant au montage d'un doigt d'appui 43 destiné à venir en appui, par une première extrémité 44 (figure 6), sur la came 12, et par une seconde extrémité 45, sur la surface d'intrados 46 (figure 12) de la pale 34 de l'aube 35, sensiblement en regard du plot 39. La seconde extrémité 45 du doigt d'appui 43 présente une surface arrondie, correspondant à la surface d'intrados 46 dans la zone d'appui correspondante.

Le doigt d'appui mobile 43 est monté coulissant dans la seconde mâchoire 23, entre une position de desserrage dans laquelle il n'appuie pas sur la surface d'intrados 46 de la pale 34 et une position de serrage dans laquelle il appuie sur cette surface 46. Le coulissement du doigt mobile 43 est provoqué par rotation de la came 12 entre ses positions rétractée et déployée. Le retour du doigt d'appui 43 en position de desserrage peut être assuré manuellement ou à l'aide de moyens de rappel élastique, par exemple à l'aide d'un ressort.

En variante (non représentée), le doigt d'appui 43 peut être monté pivotant sur la mâchoire 23, entre une position de desserrage et une position de serrage.

Deux plots 48, 49, écartés l'un de l'autre, font également saillie sur la paroi supérieure 24 de la deuxième mâchoire 23, et sont destinés à venir en appui sur la plate-forme 41 de l'aube 35, avant serrage de l'aube 35 par le doigt d'appui mobile 43, comme cela sera mieux décrit dans ce qui suit. Ces plots 48, 49 ne sont pas représentés aux figures 11 et 12 afin d'améliorer la lisibilité des dessins.

Les plots 31, 32, 37, 39, 40, 42, 48 et 49 et le doigt d'appui 43 peuvent être amovibles afin de pouvoir être changés de manière à s'adapter à différentes formes ou dimensions de pales 34. Les extrémités des plots en appui contre la pale 34 sont dépourvues d'arête vive et sont par exemple hémisphériques ou tronconiques.

Les premières extrémités 28 des mâchoires 22, 23 forment une articulation permettant d'ouvrir et de refermer les mâchoires, par pivotement autour d'un axe, constitué par une vis 50 (figure 3). Les secondes extrémités 29 des mâchoires 22, 23 peuvent être fixées l'une à l'autre par l'intermédiaire d'une vis montée dans un trou 51 de la seconde mâchoire 23 (figure 5) et vissée dans un filetage 52 de la première mâchoire 22 (figure 4). Une fois les mâchoires 22, 23 fixées l'une à l'autre, celles-ci forment un bloc 53 illustré schématiquement aux figures 7 et 8. Dans ces figures schématiques, seuls les plots d'appui 31 et 37 ont été représentés grossièrement.

En variante, les mâchoires 22, 23 peuvent être remplacées par un ensemble monobloc, sans que cela ne modifie le fonctionnement de l'invention.

Le fonctionnement de ce dispositif va maintenant être décrit.

Avant montage d'une aube 35, un bloc 53 formé des deux mâchoires 22, 23 fixées l'une à l'autre et équipées des plots d'appui 31, 32, 37, 39, 40, 42, 48, 49 et du doigt d'appui mobile 43, est monté dans au moins l'un des logements 5 du support 1. Le bloc 53 repose sur les butées 9 et est retenu dans le logement correspondant par les loquets 10. La came 12 est en position rétractée et le doigt d'appui 43 est en position de desserrage.

La pale 34 d'une aube 35 peut alors être insérée dans l'espace délimité entre les mâchoires 22, 23 du bloc 53, jusqu'à ce que la plate-forme 41 de l'aube 35 soit en appui contre les plots 48, 49 d'appui provisoire.

La came 12 est alors actionnée par un opérateur, à l'aide de la poignée 17 déplaçant le doigt d'appui 43 vers sa position de serrage. Le doigt d'appui 43 repousse alors l'aube 35 en direction des plots 31, 32, 37, 39, 40 et 42, repoussant alors également le bloc 53 contre la paroi interne du logement 5 du support 1. Ainsi, en une seule action de serrage, la pale 34 de l'aube 35 est immobilisée par le doigt d'appui 43 sur le bloc 53 et ce dernier est immobilisé sur le support 1.

L'usinage de l'aube 35, en particulier l'ajustage du pied d'aube 54, peut alors être réalisé à l'aide d'une machine à commande numérique, de la même manière que dans le document FR 10/57384. Le positionnement des points d'appui, des mâchoires 22, 23 et la rotation du support 1 autour de son axe A permettent d'avoir facilement accès à l'ensemble des zones à usiner. En outre, la pale 34 étant positionnée avec précision par rapport au support 1, l'ajustage du pied d'aube 54 peut également être effectué avec précision et de manière reproductible.

Bien entendu, une aube 35 peut être montée dans chacun des logements 5 du support 1, de sorte que plusieurs aubes 35 peuvent être ajustées en une même opération.

Le démontage de l'aube 35 est obtenu par rotation de la came 12 et de la poignée 17 dans le sens inverse, ce qui déplace le doigt d'appui 43 vers sa position de desserrage.

Le bloc 53 et/ou les plots 31, 62, 37, 39, 40, 42, 48, 49 et le doigt d'appui 43 peuvent en outre être changés facilement, lorsque l'on souhaite usiner un type d'aube différent. En effet, les positions des points d'appui peuvent varier pour chaque type d'aube.

## Revendications

1. Dispositif de maintien d'une aube (35) de turbomachine en vue d'un usinage, comportant un support (1) comprenant au moins un logement (5) dans lequel est monté de manière amovible au moins un bloc (53) présentant une ouverture de montage d'une pale (34) d'une aube (35), ledit bloc (53) comprenant au moins six points d'appui (31, 32, 37, 39, 40, 42) sur la pale (34), **caractérisé en ce qu'**il comporte un doigt d'appui mobile (43), destiné à venir en appui sur une surface d'intrados (46) ou d'extrados (33) de l'aube (35), des moyens d'actionnement (12, 17) pour déplacer le doigt d'appui (43) de façon à ce que, en position de serrage de l'aube (35), le doigt d'appui (43) plaque la pale (34) contre les points d'appui du bloc (53), qui lui-même est plaqué contre le support (1).

2. Dispositif selon la revendication 1, **caractérisé en ce que** les points d'appui sont formés par des plots (31, 32, 37, 39, 40, 42), par exemple amovibles, dont les extrémités destinées à être en contact avec l'aube (35) sont dépourvues d'arête vive et sont par exemple hémisphériques.

3. Dispositif selon la revendication 2, **caractérisé en ce que** le bloc (53) comporte une paroi interne (30) délimitant l'ouverture de montage de la pale (34), à partir de laquelle font saillie un premier, un second et un troisième plots (31, 32, 42) écartés l'un de l'autre et destinés à venir en appui sur un bord d'attaque (36) de l'aube (35) ou à proximité de celui-ci, un quatrième plot (37) destiné à venir en appui sur un bord de fuite (38) de l'aube (35) ou à proximité de celui-ci, un cinquième plot (39) destiné à venir en appui en regard du doigt d'appui mobile (43) et un sixième plot (40) destiné à venir en appui sur une plate-forme (41) de l'aube (35).

4. Dispositif selon la revendication 3, **caractérisé en ce que** le bloc (53) comporte deux plots (48, 49) destinés à venir en appui sur la plate-forme (41) de l'aube (35), avant serrage de l'aube (35) par le doigt d'appui mobile (43), la plate-forme (41) étant écartée desdits plots (48, 49) après serrage de l'aube (35).

5. Dispositif selon l'une des revendications 1 à 4, **caractérisé en ce que** le bloc (53) comporte un trou de passage du doigt d'appui mobile (53).

6. Dispositif selon l'une des revendications 1 à 5, **caractérisé en ce que** le bloc (53) est formé de deux mâchoires (22, 23) articulées l'une à l'autre à une extrémité (28) et fixées l'une à l'autre à une autre extrémité (29).

7. Dispositif selon l'une des revendications 1 à 6, **caractérisé en ce que** les moyens d'actionnement du doigt d'appui (43) comportent une came (12) équipée d'une poignée d'actionnement (17), la rotation de la came (12) à l'aide de la poignée (17) entraînant le déplacement du doigt d'appui mobile (43).

8. Dispositif selon la revendication 7, **caractérisé en ce qu'**il comporte une butée (19) de limitation de la course angulaire de la poignée d'actionnement (17).

9. Dispositif selon l'une des revendications 1 à 8, **caractérisé en ce que** le support (1) comporte plusieurs logements (5) destinés chacun au montage d'un bloc (53) et d'une aube (35).

10. Dispositif selon l'une des revendications 1 à 9, **caractérisé en ce que** le support (1) comporte des moyens de retenue (10) du bloc (53) à l'intérieur du logement (5) correspondant.

## Patentansprüche

1. Vorrichtung zum Halten einer Schaufel (35) einer Turbomaschine bzw. eines Turbotriebwerks zu deren spanenden Bearbeitung, enthaltend einen Träger (1), der zumindest eine Aufnahmeausnehmung (5) aufweist, in welcher in abnehmbarer Weise zumindest ein Block (53) gelagert ist, der eine Öffnung zum Lagern eines Schaufelblatts (34) einer Schaufel (35) aufweist, wobei der Block (53) zumindest sechs Abstützpunkte (31, 32, 37, 39, 40, 42) zur Abstützung an dem Schaufelblatt (34) aufweist, **dadurch gekennzeichnet, dass** sie einen beweglichen Abstützfinger (43) aufweist, der dazu bestimmt ist, in Abstützung an einer Fläche der Druckseite (46) bzw. der Saugseite (33) der Schaufel (35) zu gelangen, sowie Betätigungseinrichtungen (12, 17) zum Verlagern des Abstützfingers (43) derart, dass in Einspannstellung der Schaufel (35) der Abstützfinger (43) das Schaufelblatt (34) an die Abstützpunkte des Blocks (53) andrückt, der seinerseits an den Träger (1) angedrückt wird.

2. Vorrichtung nach Anspruch 1, **dadurch gekennzeichnet, dass** die Abstützpunkte von Zapfen (31, 32, 37, 39, 40, 42) gebildet werden, die beispielsweise abnehmbar ausgeführt sind und deren Enden, die mit der Schaufel (35) in Kontakt gelangen sollen, frei von scharfen Kanten und beispielsweise halbkugelförmig ausgeführt sind.

3. Vorrichtung nach Anspruch 2, **dadurch gekennzeichnet, dass** der Block (53) eine Innenwand (30) aufweist, welche die Öffnung zum Lagern des Schaufelblatts (34) begrenzt, von der ein erster, ein zweiter und ein dritter Zapfen (31, 32, 42) vorspringen, die voneinander beabstandet und dazu bestimmt sind, in Abstützung an eine Anströmkante (36) der Schaufel (35) oder in deren Nähe zu gelangen, sowie ein vierter Zapfen (37), der dazu bestimmt ist, in Abstützung an eine Abströmkante (38) der Schaufel (35) oder in deren Nähe zu gelangen, ein fünfter Zapfen (39), der dazu bestimmt ist, in Abstützung gegenüber dem beweglichen Abstützfinger (43) zu gelangen, und ein sechster Zapfen (40), der dazu bestimmt ist, in Abstützung an eine Plattform (41) der Schaufel (35) zu gelangen.

4. Vorrichtung nach Anspruch 3, **dadurch gekennzeichnet, dass** der Block (53) zwei Zapfen (48, 49) aufweist, die dazu bestimmt sind, in Abstützung an die Plattform (41) der Schaufel (35) vor dem Verspannen der Schaufel (35) über den beweglichen Abstützfinger (43) zu gelangen, wobei die Plattform (41) nach dem Verspannen der Schaufel (35) von den Zapfen (48, 49) beabstandet wird.

5. Vorrichtung nach einem der Ansprüche 1 bis 4, **dadurch gekennzeichnet, dass** der Block (53) ein Durchtrittsloch für den Durchtritt des beweglichen Abstützfingers (43) aufweist.

6. Vorrichtung nach einem der Ansprüche 1 bis 5, **dadurch gekennzeichnet, dass** der Block (53) aus zwei Backen (22, 23) gebildet ist, die an einem Ende (28) aneinander angelenkt sind und an einem anderen Ende (29) aneinander befestigt sind.

7. Vorrichtung nach einem der Ansprüche 1 bis 6, **dadurch gekennzeichnet, dass** die Betätigungseinrichtungen zum Betätigen des Abstützfingers (43) eine Steuerkurve (12) aufweisen, die mit einem Betätigungsgriff (17) versehen ist, wobei die Drehung der Steuerkurve (12) mit Hilfe des Griffs (17) die Verlagerung des beweglichen Abstützfingers (43) bewirkt.

8. Vorrichtung nach Anspruch 7, **dadurch gekennzeichnet, dass** sie einen Begrenzungsanschlag (19) zum Begrenzen des Winkelhubs des Betätigungsgriffs (17) aufweist.

9. Vorrichtung nach einem der Ansprüche 1 bis 8, **dadurch gekennzeichnet, dass** der Träger (1) mehrere Aufnahmeausnehmungen (5) aufweist, die jeweils zum Lagern eines Blocks (53) und einer Schaufel (35) bestimmt sind.

10. Vorrichtung nach einem der Ansprüche 1 bis 9, **dadurch gekennzeichnet, dass** der Träger (1) Festhalteeinrichtungen (10) zum Festhalten des Blocks (53) innerhalb der entsprechenden Aufnahmeausnehmung (5) aufweist.

## Claims

1. A device for holding a turbine engine blade (35) for the purposes of machining, the device comprising a support (1) having at least one housing (5) in which at least one block (53) is mounted in removable manner, said block (53) presenting an opening for mounting an airfoil (34) of a blade (35) and having at least six presser points (31, 32, 37, 39, 40, 42) for pressing against the airfoil (34), the device being **characterized in that** it includes a movable presser finger (43) for pressing against a pressure side surface (46) or a suction side surface (33) of the blade (35), the finger being moved by actuation means (12, 17) so that in a position for clamping the blade (35), the presser finger (43) presses the airfoil (34) against the presser points of the block (53), which itself is pressed against the support (1).

2. A device according to claim 1, **characterized in that** the presser points are formed by studs (31, 32, 37, 39, 40, 42), e.g. removable studs, having ends for coming into contact with the blade (35) that do not have any sharp edges, and that are hemispherical, for example.

3. A device according to claim 2, **characterized in that** the block (53) has an internal wall (30) defining the opening for mounting the airfoil (34), from which wall (30) there project: first, second, and third mutually spaced-apart studs (31, 32, 42) for pressing against a leading edge (36) of the blade (35) or close thereto; a fourth stud (37) for pressing against a trailing edge (38) of the blade (35) or close thereto; a fifth stud (39) for pressing in register with the movable presser finger (43); and a sixth stud (40) for pressing against a platform (41) of the blade (35).

4. A device according to claim 3, **characterized in that** the block (53) has two studs (48, 49) for pressing against the platform (41) of the blade (35) before the blade (35) is clamped by the movable presser finger (43), the platform (41) being spaced apart from said studs (48, 49) after the blade (35) has being clamped.

5. A device according to any one of claims 1 to 4, **characterized in that** the block (53) includes a hole for passing the movable presser finger (43).

6. A device according to any one of claims 1 to 5, **characterized in that** the block (53) is made up of two jaws (22, 23) that are hinged to each other at one end (28) and fastened to each other at another end (29).

7. A device according to any one of claims 1 to 6, **characterized in that** the means for actuating the presser finger (43) comprise a cam (12) fitted with an actuation handle (17), turning the cam (12) with the help of the handle (17) causing the movable presser finger (43) to move.

8. A device according to claim 7, **characterized in that** it includes an abutment (19) for limiting the angular stroke of the actuation handle (17).

9. A device according to any one of claims 1 to 8, **characterized in that** the support (1) has a plurality of housings (5), each for mounting a respective block (53) and blade (35).

10. A device according to any one of claims 1 to 9, **characterized in that** the support (1) includes retaining means (10) for retaining the block (53) inside the corresponding housing (5).
